# EUROPEAN PATENT SPECIFICATION

(11) **EP 3 328 022 B1**
(45) Date of publication and mention of the grant of the patent: **16.11.2022**
(21) Application number: 17203459.7
(22) Date of filing: 24.11.2017
(51) Int. Cl.: H04L 9/40, H04W 12/122, H04W 12/126, H04W 48/20, H04W 24/04

(54) **MANAGING WIRELESS NETWORK CONNECTION**
VERWALTUNG VON DRAHTLOSNETZWERKVERBINDUNGEN
GESTION DE CONNEXION DE RÉSEAU SANS FIL

(30) Priority: 24.11.2016 CN 201611062063
(43) Date of publication of application: 30.05.2018
(73) Proprietor: Beijing Xiaomi Mobile Software Co., Ltd., Beijing 100085 (CN)
(72) Inventor: QIAN, Zhuang, Beijing 100085 (CN)
(74) Representative: dompatent von Kreisler Selting Werner - Partnerschaft von Patent- und Rechtsanwälten mbB

(56) References cited:
- US-A1- 2005 174 961
- US-A1- 2010 296 496
- US-A1- 2016 113 047

## Description

### TECHNICAL FIELD

The present disclosure relates to managing a wireless network connection.

### BACKGROUND

With the popularization of wireless networks, wireless access points such as Wireless Fidelity (WIFI) hotspots have been set up in many families and workplaces. A user may tell a friend a password for accessing his/her wireless network so as to share a wireless access hotpot. Also, this password sharing may cause the wireless network password to be shared by a password sharing software, for example, a WIFI master key. As such, the wireless network may be accessed by an unknown wireless network squatter, which may result in insecurity of the wireless network. Moreover, without checking by a network administrator from the backend, a user may not know that his or her password is shared by others, which may lead to the bad user experience.

US 20050174961 A1 discloses an intrusion detection system (IDS). In a process the IDS follows in evaluating data associated with received traffic, all packets pass through four detections systems: signature-based testing, protocol-based testing, anomaly-based testing and policy deviation-based testing. Information within the frame is interrogated to determine whether a known attack signature has been identified, whether a protocol used in the frame is authorized, whether an anomaly exists and whether a pre-defined policy has been violated. If a test fails, the IDS signals an alarm manager to deliver an alert to an administrator.

### SUMMARY

The present disclosure provides a method and apparatus for managing wireless network connection.

According to a first aspect of the present disclosure, a method of managing a wireless network connection is provided in accordance with claim 1. The method includes: querying, by a wireless access point, an abnormally accessing device list which is configured to record identification information of each abnormal mobile device that accesses a wireless network via the wireless access point; determining, by the wireless access point, whether a number of abnormal mobile devices recorded in the abnormally accessing device list exceeds a number threshold within a first set time period; and transmitting, by the wireless access point, a prompt message to a preset device, where the preset device corresponds to the wireless access point when the number of the abnormal mobile devices accessing the wireless network within the first set time period exceeds the number threshold, and the prompt message is configured to prompt that access information of the wireless network is compromised. The method further includes: counting, by the wireless access point, a number of mobile devices accessing the wireless network within a second set time period, wherein the second set time period is a period of time when the access information of the wireless access point has not been compromised; and determining, by the wireless access point, the number threshold based on the number of mobile devices within the second set time period.

According to a second aspect of the present disclosure, an apparatus for managing a wireless network connection is provided in accordance with claim 5. The apparatus includes a processor; and a memory for storing instructions executable by the processor. The processor is configured to: query an abnormally accessing device list which is configured to record identification information of each abnormal mobile device that accesses a wireless network via a wireless access point; determine whether a number of abnormal mobile devices recorded in the abnormally accessing device list exceeds a number threshold within a first set time period; and transmit a prompt message to a preset device, where the preset device corresponds to the wireless access point when the number of the abnormal mobile devices accessing the wireless network within the first set time period exceeds the number threshold, and the prompt message is configured to prompt that access information of the wireless network is compromised. The processor is further configured to: count a number of mobile devices accessing the wireless network within a second set time period, wherein the second set time period is a period of time when the access information of the wireless access point has not been compromised; and determine the number threshold based on the number of mobile devices within the second set time period.

According to a third aspect of the present disclosure, a non-transitory computer-readable medium having instructions stored therein is provided in accordance with claim 9. The instructions when executed by a processor cause the processor to: query an abnormally accessing device list which is configured to record identification information of each abnormal mobile device that accesses a wireless network via a wireless access point; determine whether a number of abnormal mobile devices recorded in the abnormally accessing device list exceeds a number threshold within a first set time period; and transmit a prompt message to a preset device, where the preset device corresponds to the wireless access point when the number of the abnormal mobile devices accessing the wireless network within the first set time period exceeds the number threshold, and the prompt message is configured to prompt that access information of the wireless network is compromised. The instructions when executed by a processor further cause the processor to: count a number of mobile devices accessing the wireless network within a second set time period, wherein the second set time period is a period of time when the access information of the wireless access point has not been compromised; and determine the number threshold based on the number of mobile devices within the second set time period.

### BRIEF DESCRIPTION OF DRAWINGS

The accompanying drawings, which are incorporated in and constitute a part of the present description, illustrate examples consistent with the present disclosure and together with the description, serve to explain the principles of the present disclosure.
FIG. 1A is a flow diagram of a method of managing wireless network connection according to an example of the present disclosure.
FIG. 1B is a scenario diagram of a method of managing wireless network connection according to an example of the present disclosure.
FIG. 1C is a schematic diagram of prompting that a wireless network password has been leaked according to an example of the present disclosure.
FIG. 2A is a flow diagram of a method of determining whether an accessing mobile device is an abnormal device according to an example of the present disclosure.
FIG. 2B is a flow diagram of a method of determining whether an accessing mobile device is an abnormal device according to another example of the present disclosure.
FIG. 2C is a flow diagram of a method of determining whether an accessing mobile device is an abnormal device according to yet another example of the present disclosure.
FIG. 3A is a flow diagram of a method of determining a number threshold of accessing mobile devices according to the invention.
FIG. 3B is a flow diagram of a method of determining a number threshold of accessing mobile devices according to another example of the present disclosure.
FIG. 4 is a block diagram of an apparatus for managing wireless network connection according to an example of the present disclosure.
FIG. 5 is a block diagram of an apparatus for managing wireless network connection according to another example of the present disclosure.
FIG. 6 is a diagram of a hardware structure applicable to an apparatus for managing wireless network connection according to an example of the present disclosure.

Skilled artisans will appreciate that elements in the figures are illustrated for simplicity and clarity and have not necessarily been drawn to scale. For example, the dimensions and/or relative positioning of some of the elements in the figures may be exaggerated relative to other elements to help to improve understanding of various examples of the present disclosure. Also, common but well-understood elements that are useful or necessary in a commercially feasible example are often not depicted in order to facilitate a less obstructed view of these various examples. It will further be appreciated that certain actions and/or steps may be described or depicted in a particular order of occurrence while those skilled in the art will understand that such specificity with respect to sequence is not actually required. It will also be understood that the terms and expressions used herein have the ordinary technical meaning as is accorded to such terms and expressions by persons skilled in the technical field as set forth above, except where different specific meanings have otherwise been set forth herein.

### DETAILED DESCRIPTION

Example embodiments will be described in detail herein with the examples thereof expressed in the drawings. When the following descriptions involve the drawings, like numerals in different drawings represent like or similar elements unless stated otherwise. The implementations described in the following example embodiments do not represent all implementations consistent with the present disclosure.

The terminology used in the present disclosure is for the purpose of describing exemplary examples only and is not intended to limit the present disclosure. As used in the present disclosure and the appended claims, the singular forms "a," "an" and "the" are intended to include the plural forms as well, unless the context clearly indicates otherwise. It shall also be understood that the terms "or" and "and/or" used herein are intended to signify and include any or all possible combinations of one or more of the associated listed items, unless the context clearly indicates otherwise.

It shall be understood that, although the terms "first," "second," "third," and the like may be used herein to describe various information, the information should not be limited by these terms. These terms are only used to distinguish one category of information from another. For example, without departing from the scope of the present disclosure, first information may be termed as second information; and similarly, second information may also be termed as first information. As used herein, the term "if" may be understood to mean "when" or "upon" or "in response to" depending on the context.

References throughout this specification to "one embodiment," "an embodiment," "exemplary embodiment," or the like in the singular or plural means that one or more particular features, structures, or characteristics described in connection with an example is included in at least one embodiment of the present disclosure. Thus, the appearances of the phrases "in one embodiment," "in an embodiment," "in an exemplary embodiment," or the like in the singular or plural in various places throughout this specification are not necessarily all referring to the same embodiment. Furthermore, the particular features, structures, or characteristics in one or more embodiments may be combined in any suitable manner.

In the present disclosure, in order to automatically determine whether a wireless network password has been shared out, a method and a device are disclosed to remind a user to change the wireless network password in time when the wireless network password has been shared out.

In an example, the wireless access point determines whether a number of abnormal mobile devices accessing the wireless network within a first set time period exceeds a number threshold, which may include: querying, by the wireless access point, an abnormally accessing device list which is configured to record identification information of any abnormal mobile device accessing the wireless network via the wireless access point within the first set time period; and determining, by the wireless access point, whether a number of abnormal mobile devices recorded in the abnormally accessing device list exceeds the number threshold.

In an example, the method of managing wireless network connection may also include: recording, by the wireless access point, a wireless network signal intensity for a first mobile device accessing the wireless network within the first set time period; marking, by the wireless access point, the first mobile device as an abnormal mobile device when the wireless network signal intensity for the first mobile device accessing the wireless network within the first set time period is lower than a preset intensity threshold; and adding, by the wireless access point, the first abnormal mobile device to the abnormally accessing device list.

In an example, the method of managing wireless network connection may also include: counting, by the wireless access point, a number of accesses for a second mobile device to the wireless network within the first set time period; marking, by the wireless access point, the second mobile device as an abnormal mobile device if the number of accesses for the second mobile device to the wireless network is less than a number threshold of accesses; and adding, by the wireless access point, the second mobile device to the abnormally accessing device list.

In an example, the method of managing wireless network connection may also include: recording, by the wireless access point, a time for a third mobile device accessing the wireless network within the first set time period; marking, by the wireless access point, the third mobile device as an abnormal mobile device when the time for the third mobile device accessing the wireless network is less than a preset time; and adding, by the wireless access point, the third mobile device to the abnormally accessing device list.

The invention includes counting, by the wireless access point, a number of mobile devices accessing the wireless network within a second set time period; and determining, by the wireless access point, the number threshold based on the number of mobile devices accessing the wireless network within the second set time period.

According to the present invention, the method of managing wireless network connection may also include: transmitting, by the wireless access point, an access number request message to a server; receiving, by the wireless access point, a response message returned by the server in response to the access number request message; and taking, by the wireless access point, an access number acquired from the response message as the number threshold.

In an example, when determining whether the number of abnormal mobile devices accessing the wireless network within the first set time period exceeds the number threshold, the executable instructions stored in the computer-readable medium that can be executed by a processor may cause the processor to: query an abnormally accessing device list which is configured to record identification information of any abnormal mobile device accessing the wireless network via the wireless access point within the first set time period; and determine whether a number of abnormal mobile devices recorded in the abnormally accessing device list exceeds the number threshold.

In an example, the executable instructions may also cause the processor to: record a wireless network signal intensity for a first mobile device accessing the wireless network within the first set time period; mark the first mobile device as an abnormal mobile device if the wireless network signal intensity for the first mobile device accessing the wireless network within the first set time period is lower than a preset intensity threshold; and add the first mobile device to the abnormally accessing device list.

In an example, the executable instructions may also cause the processor to: count a number of accesses for a second mobile device to the wireless network within the first set time period; mark the second mobile device as an abnormal mobile device when the number of accesses for the second mobile device to the wireless network is less than a number threshold of accesses; and add the second mobile device to the abnormally accessing device list.

In an example, the executable instructions may also cause the processor to: record a time for a third mobile device accessing the wireless network within the first set time period; mark the third mobile device as an abnormal mobile device when the time for the third mobile device accessing the wireless network is less than a preset time; and add the third mobile device to the abnormally accessing device list.

In an example, the executable instructions also cause the processor to: count a number of mobile devices accessing the wireless network within a second set time period; and determine the number threshold based on the number of mobile devices accessing the wireless network within the second set time period.

According to the present invention, the executable instructions may cause the processor to: transmit an access number request message to a server; receive a response message returned by the server in response to the access number request message; and take an access number acquired from the response message as the number threshold.

The technical solutions provided in an example of the present disclosure may present the following advantages: when the number of abnormal mobile devices accessing a wireless network via a wireless access point within a first set time period exceeds a number threshold, a prompt message may be transmitted to a device of an administrator user of the wireless access point in time to remind the user that the wireless network password may have been shared by others. Thus, the problem that the administrator user may not know in time that the wireless network password has been shared by others when the administrator is not logging in the wireless network management backend to check may be solved. The wireless network security and the user experience may also be improved.

Moreover, whether a mobile device accessing the wireless network is an abnormal mobile device may be determined based on the wireless network signal intensity for the mobile device accessing the wireless network, a number of accesses for the mobile device to the wireless network, or time for the mobile device accessing the wireless network. Thus, it may be flexibly determined whether an accessing mobile device is an abnormal mobile device, and then it may be determined whether a wireless network password has been shared based on the number of abnormal mobile devices. As a result, the probability of finding in time whether a wireless network password has been shared may be improved.

When determining the value of the number threshold, a number threshold conforming to characteristics of a wireless access point may be determined by automatically counting the number of mobile devices accessing a wireless network within a second set time period, for example, a period of time during which a wireless network password has not been shared. Thus, the probability of finding in time whether a wireless network password has been shared may be improved.

When determining the value of a number threshold, the value of the number threshold may be acquired from a server side, which is not a part of the invention. Thus, the value of the number threshold determined at the server side based on big data may be used to determine whether a wireless network password has been shared, improving the accuracy of determining whether a wireless network password has been shared.

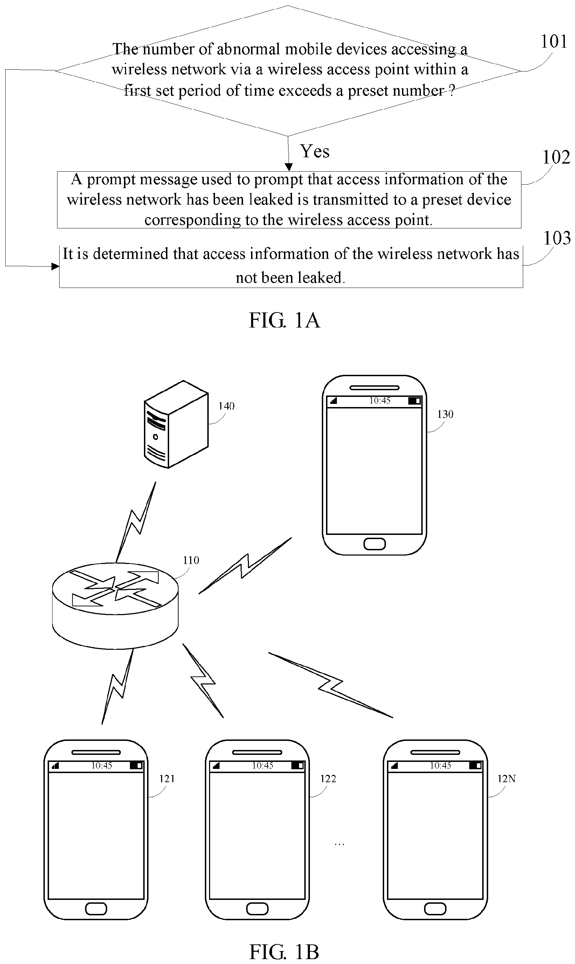

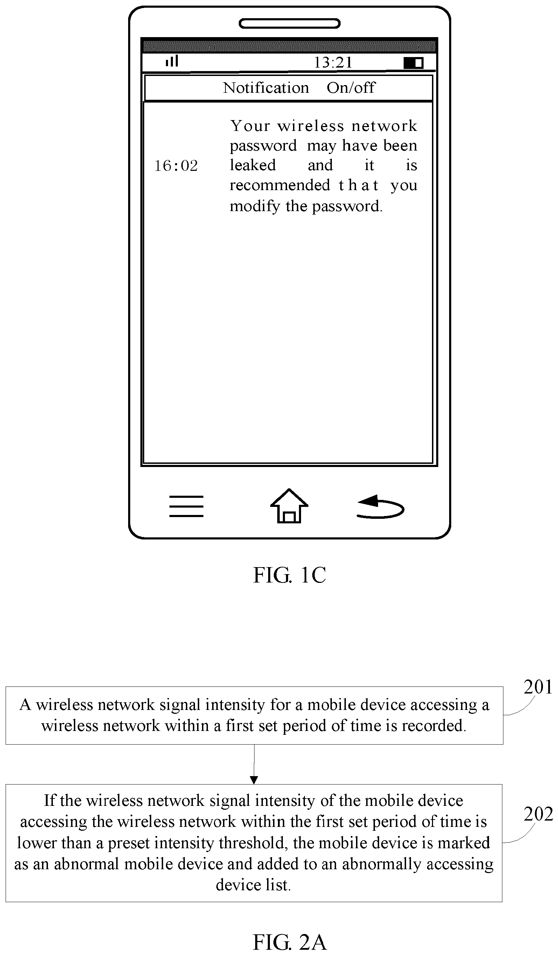

FIG. 1A is a flow diagram of a method of managing wireless network connection according to an example of the present disclosure; FIG. 1B is a scenario diagram of a method of managing wireless network connection according to an example of the present disclosure; and FIG. 1C is a schematic diagram of prompting that a wireless network password has been leaked according to an example of the present disclosure. The method of managing wireless network connection may be applied to a wireless access point such as a wireless router. As shown in FIG. 1A, the method of managing wireless network connection may include the following steps.

At step 101, whether a number of abnormal mobile devices accessing a wireless network via a wireless access point within a first set time period exceeds a number threshold may be determined. Step 102 may be performed if the number of abnormal mobile devices accessing the wireless network within the first set time period exceeds the number threshold. Step 103 may be performed if the number of abnormal mobile devices accessing the wireless network within the first set time period does not exceed the number threshold.

In an example, the first set time period may be such periods of time as one day, two days, a week or the like that may be set to determine whether the wireless network is accessed abnormally.

In an example, whether the number of abnormal mobile devices accessing the wireless network within the first set time period exceeds the number threshold may be determined by querying an abnormally accessing device list which is configured to record identification information of any abnormal mobile device accessing the wireless network via the wireless access point within the first set time period. It is determined whether a number of abnormal mobile devices recorded in the abnormally accessing device list exceeds the number threshold.

In an example, an abnormal mobile device may be a mobile device that accesses a wireless network abnormally.

In an example, whether a mobile device that is accessing a wireless network is an abnormal device may be determined based on a signal intensity for the mobile device accessing the wireless network. In another example, whether a mobile device that is accessing a wireless network is an abnormal device may be determined based on a number of accesses for the mobile device to access the wireless network.

Also, whether a mobile device that is accessing a wireless network is an abnormal device may be determined based on a time for the mobile device accessing the wireless network. Whether a mobile device that is accessing the wireless network is an abnormal device may also be determined based on a combination of any two or more of the signal intensity for accessing, the number of accesses and the time for accessing.

An abnormal device may be a mobile device having a weak wireless network signal intensity. For example, a home wireless network of a user may be accessed by other mobile devices in a residential district, and these mobile devices may be far away from a wireless router transmitting the wireless network and thus wireless network signal intensities for these mobile devices may be weak.

An abnormal device may be a one-time accessing device, i.e., a mobile device may be an abnormal device when the mobile device only accesses a wireless network for few times such as once or twice within a first set time period. For example, a non-free wireless network of a business may be shared by an unauthorized user, and the unauthorized user may access the non-free wireless network when occasionally patronizing the business.

An abnormal device may be a mobile device accessing a wireless network for a short time. For example, a stranger may connect to a wireless network through a password sharing software when waiting for a car and may take the car to leave within a short time period. Thus, the access time for the abnormal device to access the wireless network may be short.

In an example, a process of determining whether an accessing mobile device is an abnormal device may be referred to an example illustrated in FIG. 2A to FIG. 2C.

In an example, the number threshold may be a number of mobile devices normally accessing a wireless network. For example, a number of mobile devices accessing a home wireless local area network may be usually three or four. The number of mobile devices accessing a business wireless local area network may be higher, but the number may be relatively fixed and may have a relatively fixed number of devices that access the business wireless network.

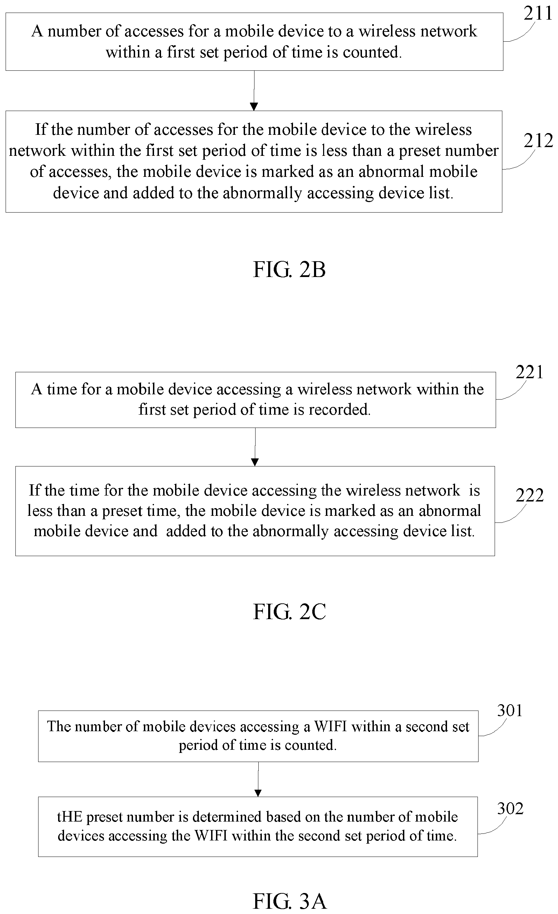

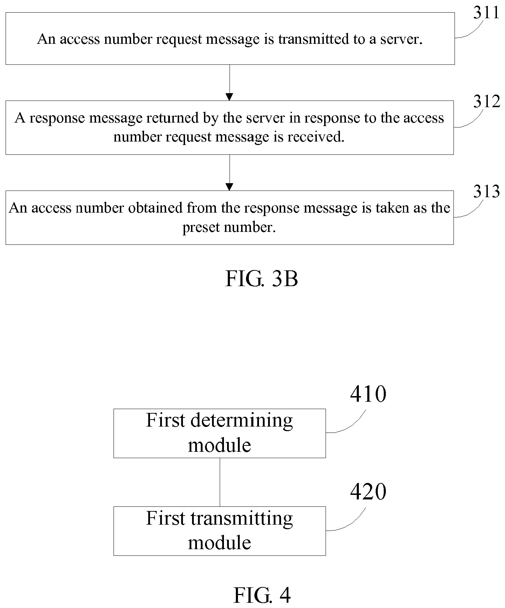

In an example, the method of determining the number threshold may refer to an example illustrated in FIG. 3A and FIG. 3B.

At step 102, a prompt message may be transmitted to a preset device corresponding to the wireless access point, where the prompt message may be used to prompt that access information of the wireless network has been compromised or leaked out.

In an example, a text message may be sent to a mobile phone of an administrator user of a wireless access point; or a notification message or a notification bar message may be transmitted to a mobile phone Application (APP). A notification bar message is transmitted to a computer of the administrator user of the wireless access point. As shown in FIG. 1C, a text prompt message of "Your wireless network password may have been leaked, it is recommended that you modify the wireless network password" may be transmitted and displayed in a mobile phone of the administrator of the wireless network.

At step 103, it may be determined that access information of the wireless network has not been compromised or leaked out.

It may be determined that access information of the wireless network has not been leaked when the number of abnormal mobile devices accessing the wireless network does not exceed the number threshold.

In an example, as shown in FIG. 1B, when detecting that the number of abnormal devices 121, 122,..., and 12N accessing a wireless network within a first set time period exceeds a number threshold, a router 110 may transmit a notification message to a device 130 (which may be a smart mobile phone, a tablet computer, or a desktop computer; the smart mobile phone is taken for example here) of an administrator user to notify the user that the wireless network password may have been compromised or leaked. Thus, the network security can be improved. The number threshold is determined by the device 130 according to a current environment. According to the not inventive example the number threshold may be obtained from a server 140 by transmitting a request message to the server 140.

Sometimes, the number of users for a user account that accesses the wireless network may be identified and may be associated with abnormal use. For example, when three (3) or more users associated with the same user account access the wireless network during a time period, it is possible that the user account may be compromised and the access may be used by unauthorized users. The check-up for the number of users for one user account may be combined with other method described herein. For example, when the number of abnormal mobile devices within the first set time period exceeds the number threshold, one or more user accounts for multiple accesses may be identified and the one or more user accounts may be compromised. The check-up for the number of users for one user account may be used separately from other methods described herein. For example, when the number of users for one user account exceeds five (5) during a time period such as one hour, the user account may be determined to be compromised even though the total number of accesses to the wireless network is normal.

When a user account is compromised, a multi-layer process may be adapted. For example, when three users are identified to access the wireless network during a time period, a reminding message may be generated and may be sent to the user's contact such as the user's email or text message that is associated with the user account. The reminding message may indicate to the user that the user's account may be compromised and the change of the password is recommended. Sometimes, during a time period such as one hour, for one user account, the number of access to the wireless network exceeds a threshold, ten (10) for example, the user account may be very likely compromised, and the suspension of the user account to access the wireless network may be performed.

In this example, when the number of abnormal mobile devices within the first set time period exceeds the number threshold, a prompt message may be transmitted in time to the device of the administrator user of the wireless access point to remind the user that the password may have been shared by unauthorized users. Thus, the problem that the administrator user may not know in time that the wireless network password has been shared by others without checking in the wireless network management backend may be solved. The wireless network security and the user experience can be improved.

In an example, determining whether the number of abnormal mobile devices accessing a wireless network within a first set time period exceeds a number threshold may include: querying an abnormally accessing device list which is configured to record identification information of any abnormal mobile device accessing the wireless network within the first set time period, and determining whether a number of abnormal mobile devices recorded in the abnormally accessing device list exceeds the number threshold..

In an example, the method may also include: recording a wireless network signal intensity for a mobile device accessing the wireless network within the first set time period; marking the mobile device as an abnormal mobile device if the wireless network signal intensity for the mobile device accessing the wireless network within the first set time period is lower than a preset intensity threshold; and adding the abnormal mobile device to the abnormally accessing device list.

In an example, the method may also include: counting a number of accesses for a mobile device to the wireless network within a first set time period; marking the mobile device as an abnormal mobile device if the number of accesses for the mobile device to the wireless network within the first set time period is less than a number threshold of accesses; and adding the abnormal mobile device to the abnormally accessing device list.

In an example, the method also includes: recording a time for a mobile device accessing the wireless network within the first set time period; marking the mobile device as an abnormal mobile device if the time for the mobile device accessing the wireless network within the first set time period is less than a preset time; and adding the abnormal mobile device to the abnormally accessing device list.

In an example, the method also includes: counting a number of mobile devices accessing the wireless network within a second set time period; and determining a number threshold based on the number of mobile devices accessing the wireless network within the second set time period.

According to the present invention, the method includes: transmitting an access number request message to a server; receiving a response message returned by the server in response to the access number request message; and receiving an access number obtained from the response message as a number threshold.

FIG. 2A is a flow diagram of a method of determining whether a mobile device accessing a wireless network is an abnormal device according to an example of the present disclosure; FIG. 2B is a flow diagram of a method of determining whether a mobile device accessing a wireless network is an abnormal device according to another example of the present disclosure; and FIG. 2C is a flow diagram of a method of determining whether a mobile device accessing a wireless network is an abnormal device according to yet another example of the present disclosure.

The above method of the example of the present disclosure is illustrated with an example in which a wireless access point determines whether a device accessing a wireless network is an abnormal device based on a wireless network signal intensity for accessing, a number of accesses and a time for accessing, respectively.

As shown in FIG. 2A, it is a flow diagram of determining whether a device accessing the wireless network is an abnormal device based on a wireless network signal intensity for the device accessing the wireless network, which includes the following steps.

At step 201, a wireless network signal intensity for a mobile device accessing the wireless network within a first set time period may be recorded.

In an example, the first set time period may be such periods of time as one day, two days and a week.

In an example, when there is a mobile device accessing the wireless network within a first set time period, the wireless access point may determine a wireless network signal intensity for the mobile device accessing the wireless network, for example, the wireless network signal intensity for the mobile device accessing the wireless network may be -70 dbm.

At step 202, if the wireless network signal intensity for the mobile device accessing the wireless network within the first set time period is lower than a preset intensity threshold, the mobile device may be marked as an abnormal mobile device and then added to an abnormally accessing device list.

In an example, the abnormally accessing device list may be configured to record identification information of an abnormal mobile device accessing a wireless network within a first set time period and its initial value may be null. Each time an accessing mobile device is determined as an abnormal device, the identification information of the device may be added to the abnormally accessing device list.

In an example, the preset intensity threshold may be an intensity value that is obtained by a wireless access point provider from actual use data of a massive number of users and may be stored in the wireless access point.

In an example, when the wireless network signal intensity for the mobile device accessing the wireless network is lower than the preset intensity threshold, the preset intensity threshold may be updated by recording the wireless network signal intensities for a device of a user accessing the wireless network at different distances within a test time period, and the updated signal intensity threshold may be then stored in the wireless access point. Thus, the preset intensity threshold may be adjustable according to the application scenario of the wireless access point.

As shown in FIG. 2B, it is a flow diagram of determining whether a device accessing a wireless network is an abnormal device based on a number of accesses for a mobile device to the wireless network, which includes the following steps.

At step 211, a number of accesses for a mobile device to the wireless network within the first set time period may be counted.

In an example, a router may count a number of accesses for each accessing mobile device to a wireless network within the first set time period by querying local access information at a particular interval. For example, within a period of one week, 30 devices have accessed a home wireless local area network of a user, and a number of accesses for each of devices other than four devices of family members of the user may be one or two.

At step 212, if the number of accesses for the mobile device to the wireless network within the first set time period is less than a number threshold of accesses, the mobile device may be marked as an abnormal mobile device and then added to the abnormally accessing device list.

In an example, the number threshold may be a small numerical value, for example, one or two.

As shown in FIG. 2C, it is a flow diagram of determining whether a device accessing a wireless network is an abnormal device based on a time for the device accessing the wireless network, which includes the following steps.

At step 221, a time for the mobile device accessing the wireless network within the first set time period may be recorded.

In an example, a router may record the time for each mobile device accessing the wireless network within the first set time period by querying local access information at a particular interval. For example, within a period of one week, 30 devices have accessed a home wireless local area network of a user, and the access time of each of devices other than four devices of family members of the user may be only five or six minutes.

At step 222, if the time for the mobile device accessing the wireless network within the first set time period is less than a preset time, the mobile device may be marked as an abnormal mobile device then added to the abnormally accessing device list.

In an example, the preset time may be a short time period, such as five minutes, ten minutes, and the like.

In this example, when determining whether a mobile device accessing a wireless network is an abnormal mobile device, it may be determined based on the wireless network signal intensity for the mobile device accessing the wireless network, a number of accesses for the mobile device to the wireless network within the first set time period, or the time for the mobile device accessing the wireless network within the first set time period.

Thus, it may be flexibly determined whether a mobile device accessing the wireless network is an abnormal mobile device, and then whether the wireless network password of the wireless network has been shared based on the number of abnormal mobile devices. As such, the probability of finding in time whether the wireless network password has been shared may be improved.

FIG. 3A is a flow diagram of a method of determining a number threshold of accessing mobile devices according to the invention, and FIG. 3B is a flow diagram of a method of determining a number threshold of accessing mobile devices according to another not inventive example. The inventive method is ilustrated in which a wireless access point determines a number threshold according to its own historical data in FIG. 3A. As shown in FIG. 3A, the method includes the following steps.

At step 301, a number of mobile devices accessing the wireless network within a second set time period is counted.

The second set time period is a period of time when the password of the wireless network has not been compromised or leaked out.

In an example, the number of mobile devices accessing the wireless network within a time period from the time at which the wireless network is initially used may be determined by querying local access information. For example, the number of mobile devices accessing the wireless network within a month after the wireless network is initially used may be 5.

At step 302, a number threshold is determined based on the number of mobile devices accessing the wireless network within the second set time period.

In an example, a numerical value may be selected as the number threshold where the numerical value is not less than the number of mobile devices actually accessing the wireless network within the second set time period and is greater than the number of the actual accesses by a certain set percentage. For example, if the counted number of mobile devices accessing the wireless network within a month is 5, then 6 or 7 may be taken and set as the number threshold. If the counted number of mobile devices accessing the wireless network within a month is 15, then 18 or 20 may be taken and set as the number threshold.

FIG. 3B illustrates that the wireless access point requests a number threshold from a server. As shown in FIG. 3B, the method, not being a part of the invention, includes the following steps.

At step 311, an access number request message may be transmitted to the server.

At step 312, a response message returned by the server in response to the access number request message may be received.

In an example, the server may determine an application scenario of a wireless access point according to identification information of the wireless access point which transmits the access number request message. For example, some wireless access points may be applied to home local area networks, and some may be applied to business local area networks for a company. Then, the server may return a corresponding number threshold to the wireless access point based on the application scenario of the wireless access point.

At step 313, an access number obtained from the response message may be taken and used as the number threshold.

In this example, when determining the value of the number threshold, a number threshold conforming to the wireless access point's own characteristics may be determined by automatically counting the number of mobile devices accessing the wireless network within the second set time period. For example, the second time period may be a period when the wireless network password is not compromised. Thus, the probability of finding in time whether the wireless network password has been compromised may be improved.

Besides, when determining the value of the number threshold, the value of the number threshold may be obtained from a server side. Thus, the value of the number threshold determined at the server side based on big data analysis may be used to determine whether the wireless network password has been compromised. As such, the accuracy of determining whether the wireless network password has been compromised may be improved.

It will be appreciated by those skilled in the art that the technical solutions in FIG. 2A, FIG. 2B and FIG. 2C in the present disclosure may be applied to the same apparatus or the same wireless access point at the same time. Different technical solutions may also be combined for use to achieve the same result according to the present disclosure.

Corresponding to the aforesaid example of the method of managing a wireless network connection, the present disclosure also provides an example of control logic of managing a wireless network connection.

FIG. 4 is a block diagram of an apparatus for managing wireless network connection according to an example of the present disclosure. When being applied to a wireless access point, the apparatus for managing wireless network connection includes: a first determining module 410 configured to determine whether a number of abnormal mobile devices accessing a wireless network via a wireless access point within a first set time period exceeds a number threshold; and a first transmitting module 420 configured to transmit a prompt message to a preset device corresponding to the wireless access point when the number of abnormal mobile devices accessing the wireless network within the first set time period exceeds the number threshold, where the prompt message is configured to prompt that access information of the wireless network has been leaked.

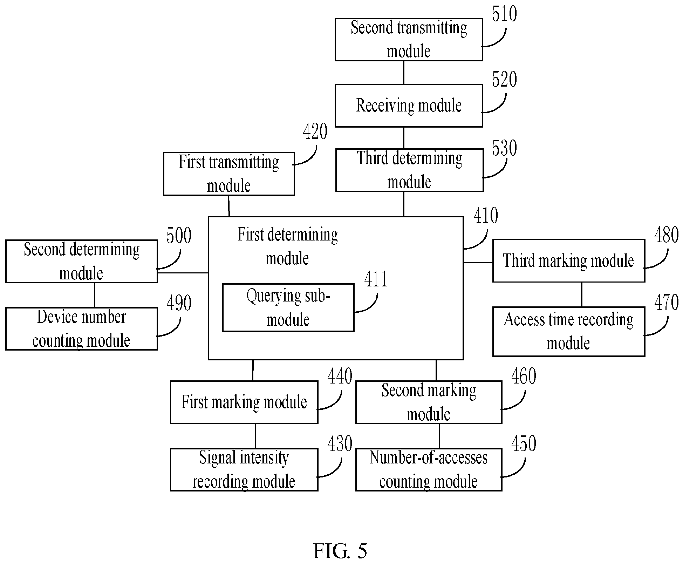

FIG. 5 is a block diagram of another apparatus for managing wireless network connection according to another example of the present disclosure.

According to FIG. 4 and shown in Fig. 5, the first determining module 410 includes: a querying submodule 411 configured to determine whether the number of abnormal mobile devices accessing the wireless network within the first set time period exceeds the number threshold by querying an abnormally accessing device list which is configured to record identification information of any abnormal mobile device accessing the wireless network within the first set time period, and determining whether a number of abnormal mobile devices recorded in the abnormally accessing device list exceeds the number threshold.

In an example, the apparatus may also include: a signal intensity recording module 430 configured to record a wireless network signal intensity for a mobile device accessing the wireless network within the first set time period; and a first marking module 440 configured to mark the mobile device as an abnormal mobile device and add the abnormal mobile device to the abnormally accessing device list when the wireless network signal intensity for the mobile device accessing the wireless network within the first set time period recorded by the signal intensity recording module 430 is lower than a preset intensity threshold.

In an example, the apparatus may also include: a number-of-accesses counting module 450 configured to count a number of accesses for a mobile device to the wireless network within the first set time period; and a second marking module 460 configured to mark the mobile device as an abnormal mobile device and add the abnormal mobile device to the abnormally accessing device list when the number of accesses for the mobile device to the wireless network counted by the number-of-accesses counting module 450 is less than a number threshold of accesses.

In an example, the apparatus may also include: an access time recording module 470 configured to record a time for a mobile device accessing the wireless network within the first set time period; and a third marking module 480 configured to mark the mobile device as an abnormal mobile device and add the abnormal mobile device to the abnormally accessing device list when the time for the mobile device accessing the wireless network recorded by the access time recording module 470 is less than a preset time.

In an example, the apparatus may also include: a device number counting module 490, configured to count a number of mobile devices accessing the wireless network within a second set time period; and a second determining module 500 configured to determine the number threshold based on the number of mobile devices accessing the wireless network within the second set time period determined by the device number counting module 490.

According to the present invention, the apparatus may further include: a second transmitting module 510 configured to transmit an access number request message to a server; a receiving module 520 configured to receive a response message returned by the server in response to the access number request message transmitted by the second transmitting module 510; and a third determining module 530 configured to take an access number obtained from the response message received by the receiving module 520 as the number threshold.

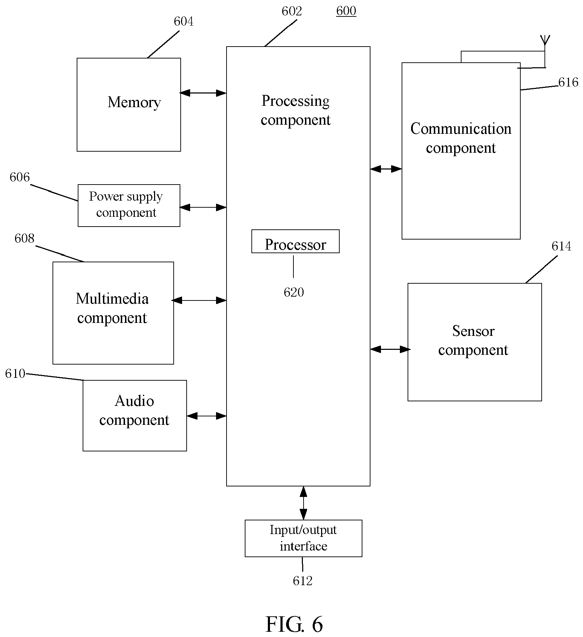

FIG. 6 is a diagram of a hardware structure applicable to an apparatus for managing a wireless network connection according to an example of the present disclosure. The apparatus of this example may be applied to a wireless access point, a wireless router for example.

Referring to FIG. 6, the apparatus 600 may include one or more of the following components: a processing component 602, a memory 604, a power supply component 606, a multimedia component 608, an audio component 610, an Input/Output (I/O) control interface 612, a sensor component 614, and a communication component 616.

The processing component 602 generally may control the overall operations of the apparatus 600, such as operations associated with data communication, camera operation and recording operation. The processing component 602 may include one or more processors 620 for executing instructions to complete all or part of steps of the above-described method. Besides, the processing component 602 may include one or more modules to facilitate interactions between the processing component 602 and other components. For example, the processing component 602 may include a multimedia module to facilitate the interaction between the multimedia component 608 and the processing component 602.

The memory 604 may be configured to store different types of data to support the operations of the apparatus 600. Examples of such data include instructions, different preset thresholds, control lists, messages, pictures, videos, and the like for any application program or method operable on the apparatus 600. The memory 604 may be implemented by any type of volatile or non-volatile storage device or a combination thereof, such as a Static Random Access Memory (SRAM), an Electrically Erasable Programmable Read-Only Memory (EEPROM), an Erasable Programmable Read-Only-Memory (EPROM), a Programmable Read-Only-Memory (PROM), a Read-Only Memory (ROM), a magnetic memory, a flash memory, a magnetic disk or an optical disk.

The power supply component 606 may provide power for the different components of the apparatus 600. The power supply component 606 may include a power management system, one or more power sources, and other components associated with generating, managing and distributing power for the apparatus 600.

The multimedia component 608 includes a screen providing an output interface between the apparatus 600 and a user. In some examples, the screen may include a Liquid Crystal Display (LCD) and/or a Touch Panel (TP). The screen, if including a touch panel, may be implemented as the touch screen to receive an input signal from a user. The touch panel includes one or more touch sensors to sense touch, slide and gestures on the touch panel. The touch sensor(s) may not only sense the boundary of a touch or slide action but also detect duration and pressure related to the touch or slide operation. In some examples, the multimedia component 608 includes a front-facing camera and/or a back-facing camera. When the apparatus 600 is in an operating mode, such as a shooting mode or a video mode, the front-facing camera and/or the back-facing camera may receive external multimedia data. Each of the front-facing camera and the back-facing camera may be a fixed optical lens system or be capable of focal length and optical zoom.

The audio component 610 may be configured to output and/or input an audio signal. For example, the audio component 610 includes a microphone (MIC). When the apparatus 600 is in an operating mode, such as a call mode, a recording mode and a speech recognition mode, the microphone is configured to receive an external audio signal. The received audio signal may be further stored in the memory 604 or transmitted via the communication component 616. In some examples, the audio component 610 may also include a speaker for outputting an audio signal.

The I/O interface 612 provides an interface between the processing component 602 and a peripheral interface module. The peripheral interface module may be a keyboard, click wheel, a button and the like. Such buttons may include but be not limited to: a home button, a volume button, a start button and a lock button.

The sensor component 614 includes one or more sensors for providing state assessments in different aspects for the apparatus 600. For example, the sensor component 614 may detect the on/off state of the apparatus 600, and relative locations of components, where the component may be a display and a small keyboard of the apparatus 600. The sensor component 614 may also detect a position change of the apparatus 600 or a component of the apparatus 600, the presence or absence of contact of a user with the apparatus 600, an orientation or acceleration/deceleration of the apparatus 600 and a temperature change of the apparatus 600. The sensor component 614 may include a proximity sensor configured to detect the presence of an object around without any physical contact. The sensor component 614 may also include an optical sensor, such as a CMOS or CCD image sensor for use in imaging application. In some examples, the sensor component 614 may also include an acceleration sensor, a gyroscope sensor, a magnetic sensor, a pressure sensor, or a temperature sensor.

The communication component 616 may be configured to facilitate wired or wireless communication between the apparatus 600 and other devices. The apparatus 600 may access a wireless network that is based on a communication standard, such as WIFI, 2G or 3G, or a combination thereof. In an example, the communication component 616 may receive a broadcast signal or broadcast related information from an external broadcast management system via a broadcast channel. In an example, the communication component 616 may also include a Near Field Communication (NFC) module to facilitate short-range communications. For example, the NFC module may be implemented based on a Radio Frequency Identification (RFID) technology, an Infrared Data Association (IrDA) technology, an Ultra Wide Band (UWB) technology, a Bluetooth (BT) technology and other technologies.

In an example, the apparatus 600 may be implemented by one or more of an Application Specific Integrated Circuit (ASIC), a Digital Signal Processor (DSP), a Digital Signal Processing Device (DSPD), a Programmable Logic Device (PLD), a Field Programmable Gate Array (FPGA), a controller, a microcontroller, a microprocessor or other electronic components to execute the above method.

In an example, there is also provided a non-transitory computer-readable storage medium storing instructions thereon, for example, the memory 604 storing instructions thereon. Such instructions may be executed by the processor 620 of the apparatus 600 to complete the above method. For example, the non-transitory computer-readable storage medium may be a Read-Only Memory (ROM), a Random Access Memory (RAM), a CD-ROM, a magnetic tape, a floppy disk, an optical data storage device, and the like.

Since the apparatus examples substantially correspond to the method examples, a reference may be made to part of the descriptions of the method examples. The apparatus examples described above are merely illustrative, where the units described as separate members may be or not be physically separated, and the members displayed as units may be or not be physical units, i.e., may be located in one place, or may be distributed to a plurality of network units. Part or all of the modules may be selected according to actual requirements to implement the objectives of the solutions in the examples. Those of ordinary skill in the art may understand and carry out them without creative work.

The present disclosure may include dedicated hardware implementations such as application specific integrated circuits, programmable logic arrays and other hardware devices. The hardware implementations can be constructed to implement one or more of the methods described herein. Applications that may include the apparatus and systems of various examples can broadly include a variety of electronic and computing systems. One or more examples described herein may implement functions using two or more specific interconnected hardware modules or devices with related control and data signals that can be communicated between and through the modules, or as portions of an application-specific integrated circuit. Accordingly, the computing system disclosed may encompass software, firmware, and hardware implementations. The terms "module," "sub-module," "circuit," "sub-circuit," "circuitry," "sub-circuitry," "unit," or "sub-unit" may include memory (shared, dedicated, or group) that stores code or instructions that can be executed by one or more processors.

## Claims

1. A method of managing a wireless network connection, wherein the method comprises:
querying, by a wireless access point, an abnormally accessing device list which is configured to record identification information of each abnormal mobile device (121, 122, ..., 12N) that accesses a wireless network via the wireless access point;
determining, by the wireless access point, whether a number of abnormal mobile devices (121, 122, ..., 12N) recorded in the abnormally accessing device list exceeds a number threshold within a first set time period; and
transmitting, by the wireless access point, a prompt message to a preset device (130), wherein the preset device (130) corresponds to the wireless access point when the number of the abnormal mobile devices (121, 122, ..., 12N) accessing the wireless network within the first set time period exceeds the number threshold, and the prompt message is configured to prompt that access information of the wireless network is compromised;
**characterized in that** the method further comprises:
counting, by the wireless access point, a number of mobile devices accessing the wireless network within a second set time period, wherein the second set time period is a period of time when the access information of the wireless access point has not been compromised; and
determining, by the wireless access point, the number threshold based on the number of mobile devices within the second set time period.

2. The method of claim 1, **characterized in that** further comprises:
recording, by the wireless access point, a wireless network signal intensity for a first mobile device accessing the wireless network within a third set time period;
marking, by the wireless access point, the first mobile device as an abnormal mobile device (121, 122, ..., 12N) when the wireless network signal intensity for the first mobile device accessing the wireless network within the third set time period is lower than a preset intensity threshold; and
adding, by the wireless access point, the first mobile device to the abnormally accessing device list.

3. The method of claim 1, **characterized in that** further comprises:
counting, by the wireless access point, a number of accesses for a second mobile device that accesses the wireless network within a fourth set time period;
marking, by the wireless access point, the second mobile device as an abnormal mobile device (121, 122, ..., 12N) when the number of accesses for the second mobile device to the wireless network is less than a number threshold of the accesses; and
adding, by the wireless access point, the second mobile device to the abnormally accessing device list.

4. The method of claim 1, **characterized in that** further comprises:
recording, by the wireless access point, a time for a third mobile device accessing the wireless network within a fifth set time period;
marking, by the wireless access point, the third mobile device as an abnormal mobile device (121, 122, ..., 12N) when the time for the third mobile device accessing the wireless network is less than a preset time; and
adding, by the wireless access point, the third mobile device to the abnormally accessing device list.

5. An apparatus for managing a wireless network connection, wherein the apparatus comprises:
a processor; and
a memory for storing instructions executable by the processor;
wherein the processor is configured to:
query an abnormally accessing device list which is configured to record identification information of each abnormal mobile device (121, 122, ..., 12N) that accesses a wireless network via a wireless access point;
determine whether a number of abnormal mobile devices (121, 122, ..., 12N) recorded in the abnormally accessing device list exceeds a number threshold within a first set time period; and
transmit a prompt message to a preset device (130), wherein the preset device (130) corresponds to the wireless access point when the number of the abnormal mobile devices (121, 122, ..., 12N) accessing the wireless network within the first set time period exceeds the number threshold, and the prompt message is configured to prompt that access information of the wireless network is compromised;
**characterized in that** the processor is further configured to:
count a number of mobile devices accessing the wireless network within a second set time period, wherein the second set time period is a period of time when the access information of the wireless access point has not been compromised; and
determine the number threshold based on the number of mobile devices within the second set time period.

6. The apparatus of claim 5, **characterized in that** the processor is further configured to:
record a wireless network signal intensity for a first mobile device accessing the wireless network within a third set time period;
mark the first mobile device as an abnormal mobile device (121, 122, ..., 12N) when the wireless network signal intensity for the first mobile device accessing the wireless network within the third set time period is lower than a preset intensity threshold; and
add the first mobile device to the abnormally accessing device list.

7. The apparatus of claim 5, **characterized in that** the processor is further configured to:
count a number of accesses for a second mobile device that accesses the wireless network within a fourth set time period;
mark the second mobile device as an abnormal mobile device (121, 122, ..., 12N) when the number of accesses for the second mobile device to the wireless network is less than a number threshold of the accesses; and
add the second mobile device to the abnormally accessing device list.

8. The apparatus of claim 5, **characterized in that** the processor is further configured to:
record a time for a third mobile device accessing the wireless network within a fifth set time period;
mark the third mobile device as an abnormal mobile device (121, 122, ..., 12N) when the time for the third mobile device accessing the wireless network is less than a preset time; and
add the third mobile device to the abnormally accessing device list.

9. A non-transitory computer-readable medium having instructions stored therein, wherein the instructions when executed by a processor cause the processor to:
query an abnormally accessing device list which is configured to record identification information of each abnormal mobile device (121, 122, ..., 12N) that accesses a wireless network via a wireless access point;
determine whether a number of abnormal mobile devices (121, 122, ..., 12N) recorded in the abnormally accessing device list exceeds a number threshold within a first set time period; and
transmit a prompt message to a preset device (130), wherein the preset device (130) corresponds to the wireless access point when the number of the abnormal mobile devices (121, 122, ..., 12N) accessing the wireless network within the first set time period exceeds the number threshold, and the prompt message is configured to prompt that access information of the wireless network is compromised;
**characterized in that** the instructions when executed by a processor further cause the processor to:
count a number of mobile devices accessing the wireless network within a second set time period, wherein the second set time period is a period of time when the access information of the wireless access point has not been compromised; and
determine the number threshold based on the number of mobile devices within the second set time period.

## Patentansprüche

1. Verfahren zur Verwaltung von drahtlosen Netzwerkverbindungen, wobei das Verfahren umfasst:
Abfragen, mittels eines Wireless Access Point, einer Liste mit anormal zugreifenden Geräten, die dazu ausgebildet ist, Identifikationsinformationen des anormalen Mobilgeräts (121, 122, ..., 12N) aufzuzeichnen, das über den Wireless Access Point auf ein drahtloses Netzwerk zugreift;
Bestimmen, mittels des Wireless Access Point, ob eine Anzahl der anormalen Mobilgeräte (121, 122, ..., 12N), die in der Liste mit anormal zugreifenden Geräten aufgezeichnet sind, einen Anzahlschwellenwert innerhalb eines ersten festgelegten Zeitraums überschreitet; und
Übermitteln, mittels des Wireless Access Point, einer Eingabeaufforderungsnachricht an ein vorbestimmtes Gerät (130), wobei das vorbestimmte Gerät (130) dem Wireless Access Point entspricht, wenn die Anzahl der anormalen Mobilgeräte (121, 122, ..., 12N), die innerhalb des ersten festgelegten Zeitraums auf das drahtlose Netzwerk zugreifen, den Anzahlschwellenwert überschreitet, und wobei die Eingabeaufforderungsnachricht dazu ausgebildet ist, anzuzeigen, dass die Zugangsinformationen des drahtlosen Netzwerks kompromittiert sind;
**dadurch gekennzeichnet, dass** das Verfahren ferner umfasst:
Zählen, mittels des Wireless Access Point, einer Anzahl der Mobilgeräte, die innerhalb eines zweiten festgelegten Zeitraums auf das drahtlose Netzwerk zugreifen, wobei der zweite festgelegte Zeitraum eine Zeitraum ist, in dem die Zugangsinformationen des Wireless Access Point nicht kompromittiert waren; und
Bestimmen, mittels des Wireless Access Point, des Anzahlschwellenwerts basierend auf der Anzahl der Mobilgeräte innerhalb des zweiten festgelegten Zeitraums.

2. Verfahren nach Anspruch 1, **dadurch gekennzeichnet, dass** das Verfahren ferner umfasst:
Aufzeichnen, mittels des Wireless Access Point, einer Signalintensität des drahtlosen Netzwerks für ein erstes Mobilgerät, das innerhalb eines dritten festgelegten Zeitraums auf das drahtlose Netzwerk zugreift;
Kennzeichnen, mittels des Wireless Access Point, des ersten Mobilgeräts als ein anormales Mobilgerät (121, 122, ..., 12N), wenn die Signalintensität des drahtlosen Netzwerks für das erste Mobilgerät, das innerhalb des dritten festgelegten Zeitraums aus das drahtlose Netzwerk zugreift, geringer als ein festgelegter Intensitätsschwellenwert ist; und
Hinzufügen, mittels des Wireless Access Point, des ersten Mobilgeräts zu der Liste mit anormal zugreifenden Geräten.

3. Verfahren nach Anspruch 1, **dadurch gekennzeichnet, dass** das Verfahren ferner umfasst:
Zählen, mittels des Wireless Access Point, einer Anzahl von Zugriffen für ein zweites Mobilgerät, das innerhalb eines vierten festgelegten Zeitraums auf das drahtlose Netzwerk zugreift;
Kennzeichnen, mittels des Wireless Access Point, des zweiten Mobilgeräts als ein anormales Mobilgerät (121, 122, ..., 12N), wenn die Anzahl der Zugriffe für das zweite Mobilgerät auf das drahtlose Netzwerk geringer als ein Anzahlschwellenwert der Zugriffe ist; und
Hinzufügen, mittels des Wireless Access Point, des zweiten Mobilgeräts zu der Liste mit anormal zugreifenden Geräten.

4. Verfahren nach Anspruch 1, **dadurch gekennzeichnet, dass** das Verfahren ferner umfasst:
Aufzeichnen, mittels des Wireless Access Point, einer Zeit für ein drittes Mobilgerät, das innerhalb eines fünften festgelegten Zeitraums auf das drahtlose Netzwerk zugreift;
Kennzeichnen, mittels des Wireless Access Point, des dritten Mobilgeräts als ein anormales Mobilgerät (121, 122, ..., 12N), wenn die Zeit für das dritte Mobilgerät, das auf das drahtlose Netzwerk zugreift, geringer als eine festgelegte Zeit ist; und
Hinzufügen, mittels des Wireless Access Point, des dritten Mobilgeräts zu der Liste mit anormal zugreifenden Geräten.

5. Vorrichtung zur Verwaltung einer drahtlosen Netzwerkverbindung, wobei die Vorrichtung aufweist:
einen Prozessor; und
einen Speicher zum Speichern von Instruktionen, die von dem Prozessor ausgeführt werden können;
wobei der Prozessor für Folgendes ausgebildet ist:
Abfragen einer Liste mit anormal zugreifenden Geräten, die dazu ausgebildet ist, Identifikationsinformationen jedes anormalen Mobilgeräts (121, 122, ..., 12N) aufzuzeichnen, das über einen Wireless Access Point auf ein drahtloses Netzwerk zugreift;
Bestimmen, ob eine Anzahl der anormalen Mobilgeräte (121, 122, ..., 12N), die in der Liste mit anormal zugreifenden Geräten aufgezeichnet sind, einen Anzahlschwellenwert innerhalb eines ersten festgelegten Zeitraums überschreitet; und
Übermitteln einer Eingabeaufforderungsnachricht an ein vorbestimmtes Gerät (130), wobei das vorbestimmte Gerät (130) dem Wireless Access Point entspricht, wenn die Anzahl der anormalen Mobilgeräte (121, 122, ..., 12N), die innerhalb des ersten festgelegten Zeitraums auf das drahtlose Netzwerk zugreifen, den Anzahlschwellenwert überschreitet, und wobei die Eingabeaufforderungsnachricht dazu ausgebildet ist, anzuzeigen, dass die Zugangsinformationen des drahtlosen Netzwerks kompromittiert sind;
**dadurch gekennzeichnet, dass** der Prozessor ferner für Folgendes ausgebildet ist:
Zählen einer Anzahl der Mobilgeräte, die innerhalb eines zweiten festgelegten Zeitraums auf das drahtlose Netzwerk zugreifen, wobei der zweite festgelegte Zeitraum eine Zeitraum ist, in dem die Zugangsinformationen des Wireless Access Point nicht kompromittiert waren; und
Bestimmen des Anzahlschwellenwerts basierend auf der Anzahl der Mobilgeräte innerhalb des zweiten festgelegten Zeitraums.

6. Vorrichtung nach Anspruch 5, **dadurch gekennzeichnet, dass** der Prozessor ferner für Folgendes ausgebildet ist:
Aufzeichnen einer Signalintensität des drahtlosen Netzwerks für ein erstes Mobilgerät, das innerhalb eines dritten festgelegten Zeitraums auf das drahtlose Netzwerk zugreift;
Kennzeichnen des ersten Mobilgeräts als ein anormales Mobilgerät (121, 122, ..., 12N), wenn die Signalintensität des drahtlosen Netzwerks für das erste Mobilgerät, das innerhalb des dritten festgelegten Zeitraums aus das drahtlose Netzwerk zugreift, geringer als ein festgelegter Intensitätsschwellenwert ist; und
Hinzufügen des ersten Mobilgeräts zu der Liste mit anormal zugreifenden Geräten.

7. Vorrichtung nach Anspruch 5, **dadurch gekennzeichnet, dass** der Prozessor ferner für Folgendes ausgebildet ist:
Zählen einer Anzahl von Zugriffen für ein zweites Mobilgerät, das innerhalb eines vierten festgelegten Zeitraums auf das drahtlose Netzwerk zugreift;
Kennzeichnen des zweiten Mobilgeräts als ein anormales Mobilgerät (121, 122, ..., 12N), wenn die Anzahl der Zugriffe für das zweite Mobilgerät auf das drahtlose Netzwerk geringer als ein Anzahlschwellenwert der Zugriffe ist; und
Hinzufügen des zweiten Mobilgeräts zu der Liste mit anormal zugreifenden Geräten.

8. Vorrichtung nach Anspruch 5, **dadurch gekennzeichnet, dass** der Prozessor ferner für Folgendes ausgebildet ist:
Aufzeichnen einer Zeit für ein drittes Mobilgerät, das innerhalb eines fünften festgelegten Zeitraums auf das drahtlose Netzwerk zugreift;
Kennzeichnen des dritten Mobilgeräts als ein anormales Mobilgerät (121, 122, ..., 12N), wenn die Zeit für das dritte Mobilgerät, das auf das drahtlose Netzwerk zugreift, geringer als eine festgelegte Zeit ist; und
Hinzufügen des dritten Mobilgeräts zu der Liste mit anormal zugreifenden Geräten.

9. Nichtflüchtiges computerlesbares Medium, auf dem Instruktionen gespeichert sind, wobei die Instruktionen bei Ausführung durch einen Prozessor den Prozessor zu Folgendem veranlassen:
Abfragen einer Liste mit anormal zugreifenden Geräten, die dazu ausgebildet ist, Identifikationsinformationen jedes anormalen Mobilgeräts (121, 122, ..., 12N) aufzuzeichnen, das über einen Wireless Access Point auf ein drahtloses Netzwerk zugreift;
Bestimmen ob eine Anzahl der anormalen Mobilgeräte (121, 122, ..., 12N), die in der Liste mit anormal zugreifenden Geräten aufgezeichnet sind, einen Anzahlschwellenwert innerhalb eines ersten festgelegten Zeitraums überschreitet; und
Übermitteln einer Eingabeaufforderungsnachricht an ein vorbestimmtes Gerät (130), wobei das vorbestimmte Gerät (130) dem Wireless Access Point entspricht, wenn die Anzahl der anormalen Mobilgeräte (121, 122, ..., 12N), die innerhalb des ersten festgelegten Zeitraums auf das drahtlose Netzwerk zugreifen, den Anzahlschwellenwert überschreitet, und wobei die Eingabeaufforderungsnachricht dazu ausgebildet ist, anzuzeigen, dass die Zugangsinformationen des drahtlosen Netzwerks kompromittiert sind;
**dadurch gekennzeichnet, dass** die Instruktionen bei Ausführung durch einen Prozessor den Prozessor ferner zu Folgendem veranlassen:
Zählen einer Anzahl der Mobilgeräte, die innerhalb eines zweiten festgelegten Zeitraums auf das drahtlose Netzwerk zugreifen, wobei der zweite festgelegte Zeitraum eine Zeitraum ist, in dem die Zugangsinformationen des Wireless Access Point nicht kompromittiert waren; und
Bestimmen des Anzahlschwellenwerts basierend auf der Anzahl der Mobilgeräte innerhalb des zweiten festgelegten Zeitraums.

## Revendications

1. Procédé de gestion d'une connexion de réseau sans fil, le procédé comprenant :
la requête, par un point d'accès sans fil, d'une liste de dispositifs à accès anormal qui est configurée pour enregistrer des informations d'identification de chaque dispositif mobile anormal (121, 122, ..., 12N) qui accède à un réseau sans fil par l'intermédiaire du point d'accès sans fil ;
la détermination, par le point d'accès sans fil, du fait de savoir si un nombre de dispositifs mobiles anormaux (121, 122, ..., 12N) enregistrés dans la liste de dispositifs à accès anormal dépasse un seuil de nombre dans une première période de temps définie ; et
la transmission, par le point d'accès sans fil, d'un message d'invite à un dispositif prédéfini (130), le dispositif prédéfini (130) correspondant au point d'accès sans fil lorsque le nombre des dispositifs mobiles anormaux (121, 122, ..., 12N) accédant au réseau sans fil dans la première période de temps définie dépasse le seuil de nombre, et le message d'invite étant configuré pour indiquer que les informations d'accès du réseau sans fil sont compromises ;
**caractérisé en ce que** le procédé comprend en outre :
le comptage, par le point d'accès sans fil, d'un nombre de dispositifs mobiles accédant au réseau sans fil dans une deuxième période de temps définie, la deuxième période de temps définie étant une période de temps pendant laquelle les informations d'accès du point d'accès sans fil n'ont pas été compromises ; et
la détermination, par le point d'accès sans fil, du seuil de nombre sur la base du nombre de dispositifs mobiles dans la deuxième période de temps définie.

2. Procédé selon la revendication 1, **caractérisé en ce qu'**il comprend en outre :
l'enregistrement, par le point d'accès sans fil, d'une intensité de signal de réseau sans fil pour un premier dispositif mobile accédant au réseau sans fil dans une troisième période de temps définie ;
le marquage, par le point d'accès sans fil, du premier dispositif mobile comme un dispositif mobile anormal (121, 122, ..., 12N) lorsque l'intensité du signal de réseau sans fil pour le premier dispositif mobile accédant au réseau sans fil dans la troisième période de temps définie est inférieure à un seuil d'intensité prédéfini ; et
l'ajout, par le point d'accès sans fil, du premier dispositif mobile à la liste de dispositifs à accès anormal.

3. Procédé selon la revendication 1, **caractérisé en ce qu'**il comprend en outre :
le comptage, par le point d'accès sans fil, d'un nombre d'accès pour un deuxième dispositif mobile qui accède au réseau sans fil dans une quatrième période de temps définie ;
le marquage, par le point d'accès sans fil, du deuxième dispositif mobile comme dispositif mobile anormal (121, 122, ..., 12N) lorsque le nombre d'accès du deuxième dispositif mobile au réseau sans fil est inférieur à un seuil de nombre des accès ; et
l'ajout, par le point d'accès sans fil, du deuxième dispositif mobile à la liste de dispositifs à accès anormal.

4. Procédé selon la revendication 1, **caractérisé en ce qu'**il comprend en outre :
l'enregistrement, par le point d'accès sans fil, d'un temps pour un troisième dispositif mobile accédant au réseau sans fil dans une cinquième période de temps définie ;
le marquage, par le point d'accès sans fil, du troisième dispositif mobile comme un dispositif mobile anormal (121, 122, ..., 12N) lorsque le temps pour l'accès du troisième dispositif mobile au réseau sans fil est inférieur à un temps prédéfini ; et
l'ajout, par le point d'accès sans fil, du troisième dispositif mobile à la liste de dispositifs à accès anormal.

5. Appareil de gestion d'une connexion de réseau sans fil, l'appareil comprenant :
un processeur ; et
une mémoire permettant de stocker des instructions exécutables par le processeur ;
le processeur étant configuré pour :
demander une liste de dispositifs à accès anormal qui est configurée pour enregistrer des informations d'identification de chaque dispositif mobile anormal (121, 122, ..., 12N) qui accède à un réseau sans fil par l'intermédiaire d'un point d'accès sans fil ;
déterminer si un nombre de dispositifs mobiles anormaux (121, 122, ..., 12N) enregistrés dans la liste de dispositifs à accès anormal dépasse un seuil de nombre dans une première période de temps définie ; et
transmettre un message d'invite à un dispositif prédéfini (130), le dispositif prédéfini (130) correspondant au point d'accès sans fil lorsque le nombre de dispositifs mobiles anormaux (121, 122, ..., 12N) accédant au réseau sans fil dans la première période de temps définie dépasse le seuil de nombre, et le message d'invite étant configuré pour indiquer que les informations d'accès du réseau sans fil sont compromises ;
**caractérisé en ce que** le processeur est en outre configuré pour :
compter un nombre de dispositifs mobiles accédant au réseau sans fil dans une deuxième période de temps définie, la deuxième période de temps définie étant une période de temps pendant laquelle les informations d'accès du point d'accès sans fil n'ont pas été compromises ; et
déterminer le seuil de nombre sur la base du nombre de dispositifs mobiles dans la deuxième période de temps définie.

6. Appareil selon la revendication 5, **caractérisé en ce que** le processeur est en outre configuré pour :
enregistrer une intensité de signal de réseau sans fil pour un premier dispositif mobile accédant au réseau sans fil dans une troisième période de temps définie ;
marquer le premier dispositif mobile comme un dispositif mobile anormal (121, 122, ..., 12N) lorsque l'intensité du signal de réseau sans fil pour le premier dispositif mobile accédant au réseau sans fil dans la troisième période de temps définie est inférieure à un seuil d'intensité prédéfini ; et
ajouter le premier dispositif mobile à la liste des dispositifs à accès anormal.

7. Appareil selon la revendication 5, **caractérisé en ce que** le processeur est en outre configuré pour :
compter un nombre d'accès pour un deuxième dispositif mobile qui accède au réseau sans fil dans une quatrième période de temps définie ;
marquer le deuxième dispositif mobile comme un dispositif mobile anormal (121, 122, ..., 12N) lorsque le nombre d'accès du deuxième dispositif mobile au réseau sans fil est inférieur à un seuil de nombre des accès ; et
ajouter le deuxième dispositif mobile à la liste des dispositifs à accès anormal.

8. Appareil selon la revendication 5, **caractérisé en ce que** le processeur est en outre configuré pour :
enregistrer un temps pour un troisième dispositif mobile accédant au réseau sans fil dans une cinquième période de temps définie ;
marquer le troisième dispositif mobile comme un dispositif mobile anormal (121, 122, ..., 12N) lorsque le temps pour l'accès du troisième dispositif mobile au réseau sans fil est inférieur à un temps prédéfini ; et
ajouter le troisième dispositif mobile à la liste des dispositifs à accès anormal.

9. Support non transitoire lisible par ordinateur sur lequel sont stockées des instructions, les instructions, lorsqu'elles sont exécutées par un processeur, amenant le processeur à :
demander une liste de dispositifs à accès anormal qui est configurée pour enregistrer des informations d'identification de chaque dispositif mobile anormal (121, 122, ..., 12N) qui accède à un réseau sans fil par l'intermédiaire d'un point d'accès sans fil ;
déterminer si un nombre de dispositifs mobiles anormaux (121, 122, ..., 12N) enregistrés dans la liste de dispositifs à accès anormal dépasse un seuil de nombre dans une première période de temps définie ; et
transmettre un message d'invite à un dispositif prédéfini (130), le dispositif prédéfini (130) correspondant au point d'accès sans fil lorsque le nombre de dispositifs mobiles anormaux (121, 122, ..., 12N) accédant au réseau sans fil dans la première période de temps définie dépasse le seuil de nombre, et le message d'invite étant configuré pour indiquer que les informations d'accès du réseau sans fil sont compromises ;
**caractérisé en ce que** les instructions, lorsqu'elles sont exécutées par un processeur, amènent en outre le processeur à :
compter un nombre de dispositifs mobiles accédant au réseau sans fil dans une deuxième période de temps définie, la deuxième période de temps définie étant une période de temps pendant laquelle les informations d'accès du point d'accès sans fil n'ont pas été compromises ; et
déterminer le seuil de nombre sur la base du nombre de dispositifs mobiles dans la deuxième période de temps définie.
